(19) **Europäisches Patentamt European Patent Office Office européen des brevets**

(11) **EP 1 986 139 A1**

(12) **EUROPEAN PATENT APPLICATION**

(43) Date of publication:
**29.10.2008 Bulletin 2008/44**

(51) Int Cl.:
***G06N 1/00*** *(2006.01)*

(21) Application number: **07106963.7**

(22) Date of filing: **25.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nederlandse Organisatie voor toegepast- natuurwetenschappelijk onderzoek TNO 2628 VK Delft (NL)**

(72) Inventor: **Raaijmakers, Stephan Alexander 1053 RE Amsterdam (NL)**

(74) Representative: **van Loon, C.J.J. Vereenigde Johan de Wittlaan 7 2517 JR Den Haag (NL)**

(54) **Machine learning hyperparameter estimation**

(57)    A method of determining hyperparameters (HP) of a classifier (1) in a machine learning system (10) uses a cross-entropy method to iteratively produce estimates of the hyperparameters. The method comprises the steps of determining the data vector producing the best result in the present iteration, and updating the hyperparameters (HP) using said data vector producing the best result in the present iteration. The sample may be restricted on the basis of the data vector producing the best result in the previous iteration.

Fig.3

**Description**

The present invention relates to hyperparameter estimation. More in particular, the present invention relates to a method and device for determining hyperparameters of classifiers in machine learning systems and applications.

Classifiers are used in machine learning systems to classify physical objects and/or their (typically digital) representations. Machine learning systems may, for example, be used to assist fruit picking robots. The classifier of the machine learning system is trained to distinguish ripe fruit (e.g. tomatoes) from unripe fruit. For each fruit item, the classifier determines a set of parameters which are compared with stored parameters in order to classify the items as "ripe" or "unripe". The classification process is, in turn, controlled by hyperparameters which determine, for example, decision criteria such as threshold values.

Classifiers are typically trained using a training set prepared on the basis of human input: an operator indicates the correct classification for the items of the training set. On the basis of these training data, the correct hyperparameters of the classifier can be estimated.

Hyperparameters may be determined using various methods, for example heuristic or statistical optimisation methods. However, many heuristic methods are ad hoc methods, while not all statistical optimisation methods are suitable for determining hyperparameters.

A particularly efficient yet relatively simple method for estimating parameters in general is the cross-entropy (CE) method. This iterative method comprises the repeated steps of drawing, in a parameterised way, a random sample of candidate solutions, and updating the parameters on the basis of the random sample. At the time of writing, the paper "A Tutorial on the Cross-Entropy Method" by P.T. de Boer et al. could be found at http://iew3.technion.ac.il/CE/tutor.php, said paper is herewith incorporated in this document in its entirety.

Unfortunately, the cross-entropy method as described in the above-mentioned paper is not suitable for determining hyperparameters. Determining optimal sets of hyperparameter values is a difficult problem due to the extremely large size of the search space: the optimal solution typically is a rate event. While the cross-entropy method is geared towards sampling rare event spaces, it is not *a priori* clear how the process of drawing hyperparameter values can be parameterised, as the hyperparameter samples are not classical parameterised probability density functions.

It is an object of the present invention to overcome these and other problems of the Prior Art and to provide a method and device for determining hyperparameters which allow efficient cross-entropy methods to be utilized.

Accordingly, the present invention provides a method of determining hyperparameters of a classifier in a machine learning system, the method involving a cross-entropy algorithm to iteratively produce estimates of the hyperparameters, each iteration comprising the steps of:

- drawing a random sample comprising a plurality of data vectors, and
- updating the hyperparameters on the basis of the random sample,

the method being characterised in that each iteration comprises the steps of:

- determining the data vector producing the best result in the present iteration, and
- updating the hyperparameters using said data vector producing the best result in the present iteration.

By determining the data vector producing the best result in the present iteration and using said data vector to update the hyperparameters, the properties of the best performing hyperparameters are used to guide the next iteration. In this way, the cross-entropy method can be used effectively for determining hyperparameters, even when the hyperparameters are not continuous and their effects are not transparent.

In a preferred embodiment, the method according to the present invention further comprises the step of restricting the sample on the basis of the data vector producing the best result in the previous iteration. The step of restricting the sample preferably involves the use of an interval surrounding the data vector producing the best result in the present iteration.

It is preferred that the step of restricting the sample is carried out prior to the step of determining the data vector producing the best result in the present iteration. However, in alternative embodiments, the step of restricting the sample is carried out during the step of updating the hyperparameters, preferably by using indicator functions. Said indicator function may have a value equal to one when the result of the sample exceeds a threshold value, and have a value equal to zero when the result of the sample is below the threshold value.

In a preferred embodiment, $E^t$ is the random sample $X^t_i$ at iteration $t$ producing the best result $S(X^t_i)$, the random sample $X^t_i$ having elements $X^t_{ij}$, wherein the step of updating the hyperparameters comprises the step of determining the hyperparameter $v^t_j$, where

$$v_j^t = \frac{\sum_{i=1}^{n} I\{S(X_i^t) \ge \gamma^t\} W(X_i^t; E^t) X_{ij}^t}{\sum_{i=1}^{n} I\{S(X_i^t) \ge \gamma^t\} W(X_i^t; E^t)} \; ,$$

wherein $\gamma^t$ is a threshold value and $W$ is a weighting function. The weighting function W is preferably given by

$$W(X_i^t; E^t) = 1 - \frac{\sqrt{\sum_{j=1}^{m} (X_{ij}^t - E_j^t)^2}}{\sqrt{\sum_{j=1}^{m} (X_{ij}^t)^2} \sqrt{\sum_{j=1}^{m} (E_j^t)^2}} \; .$$

Accordingly, the step of updating the hyperparameters may involve a weighting function based upon a distance function, preferably a Euclidean distance function. It is noted that when Euclidean distance between $E^t$ and $X_{ij}^t$ is zero, the weighting function W is equal to one.

The method according to the present invention is typically carried out by computer apparatus, for example a general purpose computer system comprising a processor and an associated memory, one part of the memory storing a software program for instructing the processor to carry out the method steps of the present invention, and another part of the memory storing data, said data comprising the hyperparameter values referred to above.

The present invention also provides a computer program product for carrying out the method as defined above. A computer program product may comprise a set of computer executable instructions stored on a data carrier, such as a CD or a DVD. The set of computer executable instructions, which allows a programmable computer to carry out the method as defined above, may also be available for downloading from a remote server, for example via the Internet.

The present invention additionally provides a classifier for use in a machine learning system, the classifier being arranged for using hyperparameters as control parameters, wherein the hyperparameters have been determined by the method according to any of the preceding claims. The classifier is preferably embodied in software, but may also be embodied in hardware, or in a combination of hardware and software.

The present invention still further provides a device for determining hyperparameters of a classifier in a machine learning system, the device comprising a processor arranged for carrying out a cross-entropy algorithm to iteratively produce estimates of the hyperparameters, each iteration comprising the steps of:

- drawing a random sample comprising a plurality of data vectors, and
- updating the hyperparameters on the basis of the random sample,

the device being characterised in that the processor is arranged such that each iteration comprises the steps of:

- determining the data vector producing the best result in the present iteration, and
- updating the hyperparameters using said data vector producing the best result in the present iteration.

A machine learning system comprising a device as defined above and/or arranged for carrying out the method as defined above is also provided by the present invention. The machine learning system may comprise hardware and/or software components.

The present invention will further be explained below with reference to exemplary embodiments illustrated in the accompanying drawings, in which:

Fig. 1 schematically shows a classifier having hyperparameters as input control variables.
Fig. 2 schematically shows a device for determining hyperparameters according to the present invention.
Fig. 3 schematically shows a machine learning system according to the present invention.

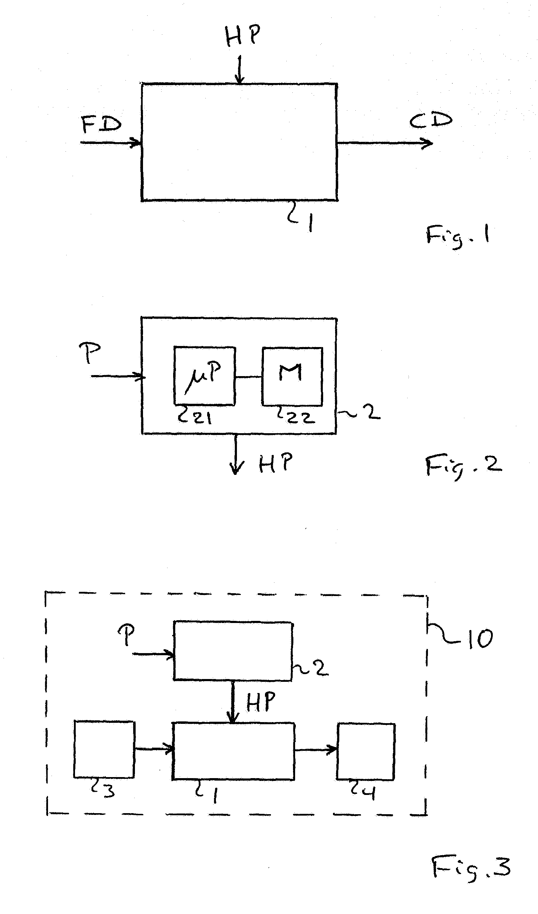

The classifier 1 shown schematically in Fig. 1 receives feature data FD and hyperparameters HP, and produces classification data CD. The feature data FD may include image data produced by a CCD (Charge Coupled Device) array or other light-sensitive device. Additionally, the feature data FD may include sound data or data concerning database items, such as library data (book numbers and titles). The classifier may be constituted by an apparatus (hardware embodiment), but is preferably constituted by a software program running on a computer apparatus, for example a general purpose computer ("personal computer"), a dedicated computer, or other suitable apparatus.

The classifier 1 is capable of classifying the items represented by the input feature data FD. The feature data FD typically comprise parameters of the items, for example their size and/or colour in the case of fruit or machine parts. Under control of the hyperparameters HP the items are each assigned to a class, for example "ripe" in the case of fruit. At least two different classes are used, and typically an item is assigned to one class only.

The hyperparameters HP determine the a decision function of the classifier: items that classifies items. For example, when this function is based upon thresholding, items producing an aggregate value (derived from the feature values) equal to or greater than the threshold are assigned to class A, while items producing a value smaller than the threshold are assigned to class B. It is noted that other classification techniques may be used as well.

Applications of the classifier 1 include picking fruit, sorting parts (e.g. machine parts), classifying books, selecting songs, recognising adult video material, detecting damage, etc..

The present invention allows the cross-entropy (CE) method to be used for estimating and determining hyperparameters. To this end, the present invention proposes to include a memory facility into the CE algorithm by preserving samples which produce a good result (the result being defined by a suitable function, such as a loss function). Additionally, or alternatively, the sampling of candidate hyperparameter settings is made dependent on the (hyper)parameter vector updated by the CE algorithm, and/or a suitably weighting function (also known as "change of measure" or "likelihood ratio" in the CE algorithm) guiding the search process should be provided.

The method of the present invention uses parameters $N$, $\rho$ and $\mu$ which are typically predetermined. It is noted that these parameters may be thought of as hyperparameters of the method but are distinct from the hyperparameters to be determined by the method. The parameter $N$ represents the number of random draws; the parameter $N$ may for example be equal to 10, 100 or 1000. In the iterations a parameter $n$ is used which represents the size of each data vector, that is, the number of elements $X_{ij}$ of each data vector $X_i$. The parameter $n$ may for example be equal to 5, 10 or 100, although other numbers are also possible. The parameter $\rho$ represents a fraction and may have a value ranging from 0.2 to 0.01, although other values may also be used. The width parameter $\mu$, which will be explained in more detail below, indicates a preferred sampling interval.

The initial set of hyperparameters, the hyperparameter vector $u$, can typically be chosen arbitrarily. Each estimated hyperparameter vector $v^t$ at point in time (or iteration number) $t$ consists of hyperparameters $v^t_j$.

In the present invention, the "best" data vector (or datum) $X^t$ of iteration $t$ is kept for use in the next iteration and is denoted $E^t$. This best data vector is found using a function $S(X^t)$ which may be a loss function or any other suitable function producing a result value based upon $X^t$, the value of $X^t$ corresponding with the maximum value of $S(X^t)$ is denoted argmax $S(X^t)$. In addition, the values of $S(X^t)$ are ranked and are used to determine a threshold $\gamma^t$, involving $\rho$ and $N$ to determine the $((1-\rho)N)^{th}$ value of $S$.

Then the hyperparameters are determined using an expression involving indicator functions $I\{S(X^t_i) \geq \gamma^t\}$ and weighting functions $W(X_i;E^t)$. The indication functions are equal to 1 when $S(X^t_i) \geq \gamma^t$ and equal to 0 when $S(X^t_i) < \gamma^t$. The weighting functions $W(X_i;E^t)$, also known as "change of measure" functions, have the data vector elements $X_i$ (actually $X^t_i$) and $E^t$ as input variables. This implies that the best data vector $E^t$ of the present iteration is used to determine the hyperparameters.

The weighting function $W(X^t_i;E^t)$ is preferably defined as:

$$W(X_i^t;E^t) = 1 - \frac{\sqrt{\sum_{j=1}^{m}(X_{ij}^t - E_j^t)^2}}{\sqrt{\sum_{j=1}^{m}(X_{ij}^t)^2}\sqrt{\sum_{j=1}^{m}(E_j^t)^2}} \qquad (1)$$

This function produces a value of 1 when the Euclidean distance between a sample and the "best" sample is 0.

Accordingly, a preferred embodiment of the method according to the present invention comprises the following steps:

1. Choose initial parameters $N$, $\rho$ and $\mu$ and generate an initial hyperparameter vector u.
2. Let $v^0 = E^0 = u$ and set iteration number $t = 1$.
3. Generate a random sample $X^t_1, ..., X^t_n$ restricted by $E^{t-1}$. Compute the performance $S(X^t_i)$ for every value of $i$ and rank the results: $S_{(1)} \leq ... \leq S_{(n)}$. Compute $\gamma^t = S_{percentile}$ and compute $E^t = \text{argmax } S(X^t)$.
4. For every hyperparameter $v^t_j$ let

$$v^t_j = \frac{\sum_{i=1}^{n} I\{S(X^t_i) \geq \gamma^t\} W(X^t_i; E^t) X^t_{ij}}{\sum_{i=1}^{n} I\{S(X^t_i) \geq \gamma^t\} W(X^t_i; E^t)} \qquad (2)$$

5. Let $t := t+1$, repeat from step 3 until the stop condition is met.

The final set $v$ of $j$ hyperparameters $v_j$ is the desired optimal set.

By using the best sample $E^t_j$ in hyperparameter estimation / update formula (2), the better results are reinforced, leading to a more efficient convergence of the method. In addition, any discontinuity problems associated with hyperparameters are overcome by the method of the present invention.

The stop criterion is preferably a non-changing value of the parameter $\gamma^t$ during a number of iterations, but could also be a threshold value. The value $S_{percentile}$ is determined using the $((1-\rho)N)^{th}$ value of S in the ranking $S_{(1)} \leq ... \leq S_{(n)}$, where rounding up may be used if this value is not an integer.

The restriction which is applied when generating a random sample at time $t$ in step 3 may be defined by the interval:

$$[E^{t-1}_j * (1 - \mu), E^{t-1}_j * (1 + \mu)] \qquad (3)$$

where $\mu$ is a width parameter and "*" denoted multiplication. If the sample $X^t_i$ lies within this interval, its distance relative to the best sample $E^t_j$ of the previous iteration is limited to the value of $\mu$. It is noted that the use of this interval is advantageous but not essential.

Alternatively, the restriction could be applied by using indicator functions $I\{X^t_{ij} \sim_\mu E^t_{ij}\}$ which are equal to 1 when $X^t_{ij}$ deviates less than $\mu$ from $E^t_{ij}$ and equal to 0 when this is not the case. Formula (2) may then be rewritten as:

$$v^t_j = \frac{\sum_{i=1}^{n} I\{S(X^t_i) \geq \gamma^t\}.I\{X^t_{ij} \sim_\mu E^t_{ij}\}.W(X^t_i; E^t, E^{t-1}) X^t_{ij}}{\sum_{i=1}^{n} I\{S(X^t_i) \geq \gamma^t\}.I\{X^t_{ij} \sim_\mu E^t_{ij}\}.W(X^t_i; E^t, E^{t-1})} \qquad (2a)$$

where

$$W(X^t_i; E^t, E^{t-1}) = \exp\left(-\sum_{j=1}^{N} X_{ij}\left(\frac{1}{E^t_j} - \frac{1}{E^{t-1}_j}\right)\right).\prod_{j=1}^{N} \frac{E^{t-1}_j}{E^t_j} \qquad (1a).$$

The device 2 for determining hyperparameters comprises a processor 21 and an associated memory 22. The memory stores both instructions for the processor and data. The device 2 receives parameters P, such as the parameters $\rho$ and $\mu$ mentioned above, and outputs hyperparameters HP. The stored instructions allow the processor to carry out the method according to the present invention.

The machine learning system 10 shown merely by way of non-limiting example in Fig. 3 comprises a classifier 1 and a device 2 for determining hyperparameters. The machine learning system 10 may further comprise at least one sensor 3 and a display screen 4. The sensor 3 serves to collect data while the display screen 4 serves to display classification result and other data.

The present invention is based upon the insight that the cross-entropy method can be adapted for hyperparameter estimation by adding a best performance preservation feature. The present invention benefits from the additional insight that the best performance in a particular iteration may be preserved by restricting the sample using the best performance of the previous iteration.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents.

It will be understood by those skilled in the art that the present invention is not limited to the embodiments illustrated above and that many modifications and additions may be made without departing from the scope of the invention as defined in the appending claims.

**Claims**

1. A method of determining hyperparameters (HP) of a classifier (1) in a machine learning system (10), the method involving a cross-entropy algorithm to iteratively produce estimates of the hyperparameters, each iteration comprising the steps of:

   - drawing a random sample comprising a plurality of data vectors, and
   - updating the hyperparameters on the basis of the random sample,

   the method being **characterised in that** each iteration comprises the steps of:

   - determining the data vector producing the best result in the present iteration, and
   - updating the hyperparameters using said data vector producing the best result in the present iteration.

2. The method according to claim 1, further comprising the step of restricting the sample on the basis of the data vector producing the best result in the previous iteration.

3. The method according to claim 2, wherein the step of restricting the sample involves using an interval surrounding the data vector producing the best result in the present iteration.

4. The method according to claim 2 or 3, wherein the step of restricting the sample is carried out prior to the step of determining the data vector producing the best result in the present iteration.

5. The method according to claim 2 or 3, wherein the step of restricting the sample is carried out during the step of updating the hyperparameters, preferably by using indicator functions.

6. The method according to any of the preceding claims, wherein the step of updating the hyperparameters involves a weighting function.

7. The method according to any of the preceding claims, wherein $E^t$ is the random sample $X^t_i$ at iteration t producing the best result $S(X^t_i)$, the random sample $X^t_i$ having elements $X^t_{ij}$, wherein the step of updating the hyperparameters comprises the step of determining the hyperparameter $v^t_j$, where

$$v^t_j = \frac{\sum_{i=1}^{n} I\{S(X^t_i) \geq \gamma^t\} W(X^t_i; E^t) X^t_{ij}}{\sum_{i=1}^{n} I\{S(X^t_i) \geq \gamma^t\} W(X^t_i; E^t)} \ ,$$

wherein $\gamma^t$ is a threshold value and $W$ is a weighting function.

8. The method according to claim 7, wherein the weighting function $W$ is given by

$$W(X_i^t; E^t) = 1 - \frac{\sqrt{\sum_{j=1}^{m}(X_{ij}^t - E_j^T)^2}}{\sqrt{\sum_{j=1}^{m}(X_{ij}^t)^2}\sqrt{\sum_{j=1}^{m}(E_j^t)^2}}$$

9. The method according to any of the preceding claims, carried out by computer apparatus.

10. A computer program product for carrying out the method according to any of the preceding claims.

11. A classifier for use in a machine learning system, the classifier being arranged for using hyperparameters as control parameters, wherein the hyperparameters have been determined by the method according to any of the preceding claims.

12. A device (2) for determining hyperparameters of a classifier in a machine learning system (10), the device comprising a processor (21) arranged for carrying out a cross-entropy algorithm to iteratively produce estimates of the hyperparameters, each iteration comprising the steps of:

- drawing a random sample comprising a plurality of data vectors, and
- updating the hyperparameters on the basis of the random sample,

the device being **characterised in that** the processor is arranged such that each iteration comprises the steps of:

- determining the data vector producing the best result in the present iteration, and
- updating the hyperparameters using said data vector producing the best result in the present iteration.

13. The device according to claim 11, wherein the processor (21) is further arranged for restricting the sample on the basis of the data vector producing the best result in the previous iteration.

14. A machine learning system (10), comprising a device (2) according to claim 12 or 13.

Fig.1

Fig.2

Fig.3

European Patent
Office

**EUROPEAN SEARCH REPORT**

Application Number

EP 07 10 6963

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | PIETER-TJERK DE BOER ET AL: "A Tutorial on the Cross-Entropy Method" ANNALS OF OPERATIONS RESEARCH, KLUWER ACADEMIC PUBLISHERS, BO, vol. 134, no. 1, 1 February 2005 (2005-02-01), pages 19-67, XP019390347 ISSN: 1572-9338 * paragraph [3.1.] * ----- | 1-14 | INV. G06N1/00 |
| X | SHIE MANNOR, DORI PELEG AND REUVEN RUBINSTEIN: "The cross entropy method for classification" PROCEEDINGS OF THE 22ND INTERNATIONAL CONFERENCE ON MACHINE LEARNING, 11 August 2005 (2005-08-11), XP002449298 * paragraph [0003] * ----- | 1-14 | |

TECHNICAL FIELDS
SEARCHED      (IPC)

G06N

The present search report has been drawn up for all claims

| Place of search | Date of completion of the search | Examiner |
|---|---|---|
| The Hague | 4 September 2007 | Valencia, Erika |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..................................................................................................
& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **P.T. DE BOER et al.** *A Tutorial on the Cross-Entropy Method, http://iew3.technion.ac.il/CE/tutor.php*